# EUROPEAN PATENT APPLICATION

(11) **EP 3 337 144 A1**
(43) Date of publication of application: **20.06.2018**
(21) Application number: 16306671.5
(22) Date of filing: 13.12.2016
(51) Int. Cl.: H04M 1/725, H02J 7/00, H02H 1/00, H02H 7/00, H02H 7/18, H02H 3/00

(54) **MOBILE HANDSET AND METHOD OF OPERATING A MOBILE HANDSET**

(71) Applicant: Alcatel Lucent, 91620 Nozay (FR)
(72) Inventor: Rajapandiyan, Karthick, 600096 Chennai (IN); Asrani, Mohit, 600096 Chennai (IN); Pandurangan, Harikumar, 600096 Chennai (IN)
(74) Representative: DREISS Patentanwälte PartG mbB

(57) **Abstract**

Mobile handset (100; 100a) comprising at least one input interface (112) for receiving a charging current (Pi) from an external power supply (200) and an output interface (114) for output of electrical power (Pel) to at least one further component (120) of said handset (100; 100a), wherein said mobile handset (100; 100a) further comprises a charging current control device (130) that is configured to interrupt a flow of said charging current from said at least one input interface (112) to said at least one further component (120), wherein said mobile handset (100; 100a) is configured to make a determination as to whether a user interacts with the mobile handset (100; 100a), and to control the charging current control device (130) based on said determination.

## Description

### Specification

### Field of the invention

The disclosure relates to a mobile handset comprising at least one input interface for receiving a charging current from an external power supply and an output interface for output of electrical power to at least one further component of said handset.

The disclosure further relates to a method of operating such device.

### Background

Conventional mobile handsets such as mobile telephones or smartphones may usually be supplied with electric energy by external power adapters that can be connected to the input interface of the smartphone. Generally, it is also possible for a person to use the smartphone while it is connected to such external power adapter. However, this may be hazardous to the user, as conventional power adapters may e.g. be connected to an alternating current (AC) network with their primary side, said AC network usually operating with peak voltages exceeding 300 Volts at least in some national AC grid systems.

### Summary

Various embodiments provide an improved mobile handset and an improved method of operating such device which reduce the risk of potentially hazardous operating conditions.

In some embodiments, said mobile handset comprises a charging current control device that is configured to interrupt a flow of a charging current from said at least one input interface to said at least one further component, which enables to control the flow of electrical energy, that is represented by said charging current, from said at least one input interface, for example according to an operational state of the mobile handset. Advantageously, said handset is further configured to make a determination as to whether a user interacts with the mobile handset, and to control the charging current control device based on said determination. Thus, potentially hazardous operating conditions may be avoided.

According to a further embodiment, said determination related to a user interaction may comprise at least one of the following: determining whether a user currently uses a user interface of the device, for example a graphical user interface (GUI); determining whether a user currently unlocks the device (e.g., by entering a password or by using a finger print reader of the device); determining physical movement parameters of said device which may e.g. be obtained by sensors integrated into the device.

According to a further embodiment, said mobile handset is configured to control the charging current control device to interrupt said flow of said charging current from said at least one input interface to said at least one further component if a user interaction with the mobile handset is detected. This way, potentially hazardous operating conditions may be avoided. According to a preferred embodiment, said step of interrupting involves providing a galvanic isolation between the input interface and the at least one further component or providing such galvanic isolation at least relating to one (of potentially several) electrical conductor(s) of the involved components.

According to a further embodiment, said mobile handset is configured to control the charging current control device to interrupt said flow of said charging current from said at least one input interface to said at least one further component if a headset is connected to a headset interface, which may also contribute to avoid potentially hazardous operating conditions.

According to a further embodiment, said input interface comprises at least one of the following elements: a low voltage direct current (DC) input, a universal serial bus, USB, input, a wireless power receiver circuit. For example, the low voltage direct current input may be configured to receive electric energy in form of a DC voltage of e.g. 5 Volt (V) from an external power adapter that is connected to an AC grid network on its primary side and that is configured to convert an AC voltage of said grid network of e.g. 230 Volts to 5V DC. According to a further example, the input interface may comprise a USB interface which may be used to power the mobile handset and which may further be used for data communication with said device.

According to another example, a wireless power receiver circuit may be used as an input interface which provides for inductive energy supply. In other words, when using said wireless power receiver circuit, energy may be supplied to the mobile handset from said external power supply in the form of time varying magnetic fields using the principle of magnetic induction. As an example, said time varying magnetic fields may effect an electromotive force (EMF) within a receiver coil of the input interface that, in turn, causes a charging current to flow within said receiver coil. While this technique does not require a galvanic electrical connection between the input interface and the corresponding external power supply, according to some embodiments, it may also be beneficial to interrupt an electrical energy flow from such wireless power receiver circuit to the output interface of the mobile handset to avoid potentially hazardous operating conditions.

According to further embodiments, where a plurality of input interfaces (e.g., a USB interface and a wireless power receiver circuit) are provided for receiving input power from one or more external power supplies, it is also possible for the charging current control device to selectively interrupt a flow of a charging current from a specific one of said input interfaces to said output interface and/or said further components. However, according to further embodiments, it is preferred that the charging current control device interrupts a flow of a charging current from all input interfaces to said output interface.

According to a further embodiment, said charging current control device comprises an electric switch, for example a solid state switch such as a MOS (metal oxide semiconductor) FET field-effect transistor).

According to a further embodiment, said switch is a relay, which is particularly beneficial as it provides a comparatively high degree of electrical isolation. According to a further embodiment, said mobile handset is configured to signal to a user whether said flow of said charging current from said at least one input interface to said at least one further component is enabled. The signalling may e.g. comprise a visual signal, e.g. an information displayed on a graphical user interface of the device, and/or an acoustic signal such as a loudspeaker announcement, e.g. a spoken text information output via an audio output of the device. Other forms of signalling such as e.g. kinaesthetic signalling (e.g., vibration) may also be used according to further embodiments.

According to a further embodiment, said signalling may e.g. be made before an incoming call is signalled or connected and/or before an outgoing call is initiated. According to other embodiments, said signalling may e.g. be made if a headset is connected to said device while said external power supply is connected to said at least one input interface of the device.

Further embodiments feature a method of operating a mobile handset comprising at least one input interface for receiving a charging current from an external power supply and an output interface for output of electrical power to at least one further component of said handset, wherein said mobile handset comprises a charging current control device that interrupts a flow of said charging current from said at least one input interface to said at least one further component, wherein said mobile handset makes a determination as to whether a user interacts with the handset and controls the charging current control device based on said determination.

Further advantages and embodiments are provided by the dependent claims.

### Brief description of the figures

Further features, aspects and advantages of the illustrative embodiments are given in the following detailed description with reference to the drawings in which:
Figure 1 schematically depicts a block diagram of a mobile handset according to an embodiment,
Figure 2 schematically depicts a simplified flowchart of a method according to an embodiment, and
Figure 3 schematically depicts a block diagram of a mobile handset according to a further embodiment.

### Description of the embodiments

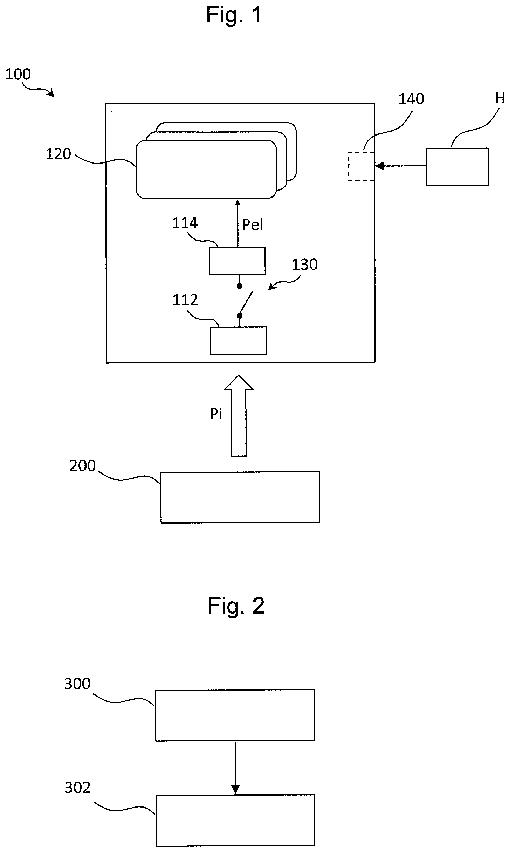

Figure 1 schematically depicts a block diagram of a mobile handset 100 according to an embodiment. The device 100 may e.g. be a radio telephone or a smartphone for a cellular radio communications systems such as e.g. according to the Long Term Evolution (LTE) standard. The principle according to the embodiments is not limited to radio telephones or smartphones. However, for brevity, the following exemplary explanations relate to the application of the principle according to the embodiments to a smartphone.

The smartphone 100 comprises at least one input interface 112 for receiving a charging current Pi from an external power supply 200. According to some embodiments, the charging current represents electrical input power provided to the device 100 in the form of an electric current (at a certain electric voltage). In this context, the term "charging current" denotes an electric current input to the smartphone 100 (or handset, generally), for the purpose of charging and/or operating any electric load of the handset 100. In other words, the charging current Pi may also be used (only) for powering electric loads such as e.g. a processor or a display, while not charging any battery or any other form of electrical energy storage device (capacitor) that may be provided in said handset 100. Preferably, said input interface 112 is an integral part of the smartphone 100 and e.g. integrated into a housing thereof.

As an example, said input interface 112 comprises a low voltage direct current input which is configured to receive electric energy in form of a charging current Pi at a DC voltage of e.g. 5 Volts from the external power supply 200. Said external power supply 200 may be a power adapter that is connected to an AC grid network (not shown) on its primary side and that is configured to convert an AC voltage of said grid network of e.g. 230 Volts to 5V DC for output to the input interface 112 of the smartphone 100.

The smartphone 100 further comprises an output interface 114 for output of electrical power Pel to at least one further component 120 of the smartphone 100. Preferably, said output interface 114 is an integral part of the smartphone 100 and e.g. integrated into a housing thereof.

In some embodiments, input power Pi received from said external power supply 200 via said input interface 112 may be directly forwarded to the output interface 114, especially in cases where the input power Pi is provided as electric power in the form of a comparatively low DC voltage.

According to further embodiments, it is possible that received input power Pi is converted to a suitable form of electric power Pel prior to providing said electric power Pel at the output interface 114. Such conversion may e.g. involve converting received magnetic field energy (when providing a magnetic induction receiver at the input interface 112) to electric energy, and/or converting a voltage to a suitable voltage level for output to the output interface 114. A corresponding conversion device is not depicted by Fig. 1 for reasons of clarity.

The smartphone 100 further comprises a charging current control device 130 that is configured to interrupt a flow of said charging current from said at least one input interface 112 to said at least one further component 120 of the smartphone 100. Presently, the charging current control device 130 is symbolised in figure 1 by a switch symbol. According to preferred embodiments, the charging current control device 130 may comprise an electric switch that enables to selectively connect the components 112, 114 with each other, or to disconnect said components 112, 114 from each other. According to a preferred embodiment, said switch comprises a relay.

In some embodiments, where a conversion device as mentioned above is provided, the functionality of the charging current control device 130 may also at least partly be integrated into such conversion device.

The charging current control device 130 may e.g. be controlled by a processing unit of the smartphone 100 which may also control an operation of the smartphone 100 and its further components 120 in a per se known manner.

Figure 2 schematically depicts a simplified flowchart of a method according to an embodiment. In a first step 300, the smartphone 100 makes a determination as to whether a user interacts with the smartphone 100. In step 302, the smartphone 100 controls the charging current control device 130 based on said determination 300.

According to a further embodiment, said smartphone 100 controls the charging current control device 130 (Fig. 1) to interrupt said flow of said charging current from said at least one input interface 112 to said at least one further component 120 if a user interaction with the smartphone 100 is detected. This may e.g. be the case if a user interacts with a graphical user interface, GUI, of the smartphone 100.

According to a further embodiment, if no user interaction with the smartphone 100 is detected, the charging current control device 130 may be controlled to not interrupt said flow of said charging current between the components 112, 120 any longer.

According to a further embodiment, the smartphone 100 is configured to periodically make said determination 300 (Fig. 2) and to correspondingly control the flow of said charging current depending thereon. This advantageously enables to disconnect or interrupt said flow of said charging current whenever a user interacts with the smartphone 100, and to enable said flow of said charging current if no user interaction with the smartphone 100 is detected.

According to a further embodiment, the smartphone 100 may comprise a headset interface 140 for connecting a headset H, e.g. ear plugs or the like, to the smartphone 100, and said smartphone 100 is configured to control the charging current control device 130 to interrupt said flow of said charging current from said at least one input interface 112 to said at least one further component 120 if a headset H is connected to said headset interface 140.

According to a further embodiment, said smartphone 100 signals to a user whether said flow of said charging current from said at least one input interface 112 to said at least one further component 120 is enabled. This way, the user can e.g. be made aware of the fact that the external power supply 200 is (still) connected to the smartphone 100 and/or should be disconnected in specific operational states of the smartphone 100.

According to further embodiments, the signalling may e.g. comprise a visual signal, e.g. an information displayed on a graphical user interface of the smartphone 100, and/or an acoustic signal such as a loudspeaker announcement, e.g. a spoken text information output via an audio output (loudspeaker and/or headset H) of the device 100. Other forms of signalling such as e.g. kinaesthetic signalling (vibration) may also be used according to further embodiments.

According to further embodiments, said signalling may e.g. performed if at least one of the following conditions is met: an incoming call is detected, an outgoing call is detected, a headset H is connected to a headset interface 140.

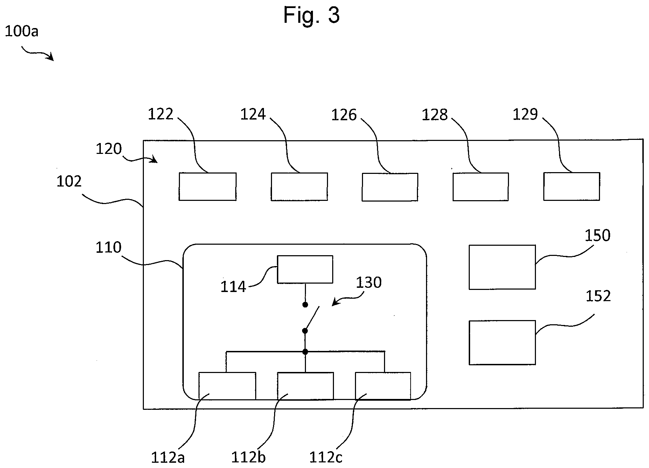

Figure 3 schematically depicts a block diagram of a mobile handset 100a according to a further embodiment. Similar to the embodiment of Fig. 1, said mobile handset 100a may be a smartphone for a cellular radio communications network.

The smartphone 100a comprises a power management device 110 having three input interfaces 112a, 112b, 112c for receiving input power, e.g. a charging current, from an external power supply 200 (Fig. 1) and an output interface 114 for output of electrical power to the further components 120, 152 of the smartphone 100a.

The smartphone 100a further comprises a processing unit 122 that may e.g. comprise a digital signal processor (DSP) and/or a microcontroller and/or an application specific integrated circuit (ASIC) or the like.

The smartphone 100a further comprises a memory unit 124 that may comprise one or more volatile memory devices such as RAM (random access memory) and/or non-volatile memory devices such as ROM (read only memory) and/or FLASH EEPROM. Application programs for execution by the processing unit 122 may e.g. be stored in said memory unit 124.

The smartphone 100a further comprises a display device 126 which may e.g. comprise a touch-sensitive display for displaying information to a user and receiving touch input commands from a user.

The smartphone 100a may further comprise an audio subsystem 128 configured to receive audio signals such as speech input from a user and to output audio signals to the user, e.g. by means of a loudspeaker and/or a headset H (Fig. 1).

A radio transceiver is symbolized by block 129.

The smartphone 100a further comprises a battery 150, preferably a rechargeable battery, and a charging circuit 152 for (re-)charging said battery 150.

According to a preferred embodiment, the components 110, 112a, 112b, 112c, 114, 120, 130, 140 (Fig. 1), 150 (Fig. 3), 152 are all integrated into a common housing 102 of the smartphone 100a.

Presently, the charging current control device 130 according to the embodiments comprises a relay and is integrated into the power management device 110.

The first input interface 112a comprises a low voltage direct current input configured to directly receive electric energy in form of a charging current at a DC voltage of e.g. 5 Volts from an external power adapter that is connected to an AC grid network on its primary side and that is configured to convert an AC voltage of said grid network of e.g. 230 Volts to 5V DC.

The second input interface 112b comprises a universal serial bus, USB, input which may also be used for powering the smartphone 100a in a per se known manner. Similar to the first input interface 112a, the USB interface 112b may be used to provide a charging current at a DC voltage to the smartphone 100a.

The third input interface 112c comprises a wireless power receiver circuit that may receive input power from a time varying magnetic field provided by an external source.

According to an embodiment, the charging current control device 130 may interrupt a flow of said charging current from any of the three input interfaces 112a, 112b, 112c to said further components 120, e.g. by opening its relay. Such interruption may e.g. be effected if a user interaction with the smartphone 100a is detected, e.g. if a user is entering data into a graphical user interface of the smartphone 100a using display device 126 or if a headset is connected to the smartphone 100a. Thus, potentially hazardous operating conditions may be avoided.

If the relay of the charging current control device 130 is opened, an electrical power supply to the components 110, 120 is provided by the battery 150. However, no flow of said charging current from the inputs 112a, 112b, 112c to the further components 120 is possible, and hence substantially no energy can be transferred into the smartphone 100a or at least to its further components 120 from the external device 200 (Fig. 1). Specifically, the charging circuit 152, which may also be supplied with electric energy by the output interface 114, is neither supplied with electric energy if said relay is opened. This way, charging of the battery 150 may also be prevented in certain operational states (e.g., during incoming or outgoing calls, use of headset) of the smartphone 100a.

According to further embodiments, the relay may be closed (again) if no user interaction with the smartphone 100a is detected, thus enabling to power the components 120, 152 using the external power supply 200 (Fig. 1).

According to a further embodiment, whenever a voice call is established with the smartphone 100a (either incoming call or outgoing call), the charging current control device 130 may be controlled to interrupt the flow of said charging current between components 112, 120. Once said voice call is completed, the charging current control device 130 may be controlled to enable the flow of said charging current between components 112, 120, e.g. by closing its relay.

According to a further embodiment, an application processor 122, which runs one or more applications of the smartphone 100a, may be configured to determine whether a user interaction such as voice calls or connection of a headset takes place. If so, the application processor 122 may control the charging current control device 130 to interrupt the flow of said charging current between components 112, 120. Once said application processor 122 determines that no user interaction takes place (any more) (e.g., voice call is terminated and/or headset is a disconnected), the charging current control device 130 may be controlled to enable the flow of said charging current between components 112, 120.

According to further embodiments, the smartphone 100a, preferably under control of its application processor 122, may be configured to make a special loudspeaker announcement to the user if it is determined that a flow of said charging current between the input interface 112 and the at least one further component 120 is enabled. This may e.g. be done prior to connecting a voice call and/or if detecting that a headset is connected.

According to further embodiments, instead of providing a switch between the input interface 112 and the output interface 114 as depicted by Fig. 1, such switch could also be placed between the output interface 114 and at least one further component 120, 152.

Also, regarding the embodiment depicted by figure 3, alternatively or in addition to a "common" switch between the input interfaces 112a, 112b, 112c, individual switches assigned to the specific input interfaces 112a, 112b, 112c (and/or individual switches between the output interface 114 and specific further devices 122, 124, 126, 152) could also be provided according to further embodiments.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Mobile handset (100; 100a) comprising at least one input interface (112) for receiving a charging current (Pi) from an external power supply (200) and an output interface (114) for output of electrical power (Pel) to at least one further component (120) of said handset (100; 100a), wherein said mobile handset (100; 100a) further comprises a charging current control device (130) that is configured to interrupt a flow of a charging current from said at least one input interface (112) to said at least one further component (120), wherein said mobile handset (100; 100a) is configured to make a determination as to whether a user interacts with the mobile handset (100; 100a), and to control the charging current control device (130) based on said determination.

2. Mobile handset (100; 100a) according to claim 1,
wherein said mobile handset (100; 100a) is configured to control the charging current control device (130) to interrupt said flow of said charging current from said at least one input interface (112) to said at least one further component (120) if a user interaction with the mobile handset (100; 100a) is detected.

3. Mobile handset (100; 100a) according to one of the preceding claims, wherein said mobile handset (100; 100a) comprises a headset interface (140) for connecting a headset (H), and wherein said mobile handset (100; 100a) is configured to control the charging current control device (130) to interrupt said flow of said charging current from said at least one input interface (112) to said at least one further component (120) if a headset (H) is connected to said headset interface (140).

4. Mobile handset (100; 100a) according to one of the preceding claims, wherein said input interface (112) comprises at least one of the following elements: a low voltage direct current input (112a), a universal serial bus, USB, input (112b), a wireless power receiver circuit (112c).

5. Mobile handset (100; 100a) according to one of the preceding claims, wherein said charging current control device (130) comprises an electric switch.

6. Mobile handset (100; 100a) according to claim 5,
wherein said switch is a relay.

7. Mobile handset (100; 100a) according to one of the preceding claims, wherein said mobile handset (100; 100a) is configured to signal to a user whether said flow of said charging current from said at least one input interface (112) to said at least one further component (120) is enabled.

8. Mobile handset (100; 100a) according to claim 7,
wherein said mobile handset (100; 100a) is configured to signal to a user that said flow of said charging current from said at least one input interface (112) to said at least one further component (120) is enabled if at least one of the following conditions is met: an incoming call is detected, an outgoing call is detected, a headset (H) is connected to a headset interface.

9. Method of operating a mobile handset (100; 100a) comprising at least one input interface (112) for receiving a charging current (Pi) from an external power supply (200) and an output interface (114) for output of electrical power (Pel) to at least one further component (120) of said handset (100; 100a), the method comprising: in a charging current control device (130), interrupting (302) a flow of a charging current from said at least one input interface (112) to said at least one further component (120), in said mobile handset (100; 100a) making (300) a determination as to whether a user interacts with the handset (100; 100a), and in said mobile handset (100; 100a), controlling (302) the charging current control device (130) based on said determination.

10. Method according to claim 9, wherein said method further comprises: in said mobile handset (100; 100a), controlling the charging current control device (130) to interrupt said flow of said charging current from said at least one input interface (112) to said at least one further component (120) if a user interaction with the mobile handset (100; 100a) is detected.

11. Method according to one of the claims 9 to 10, wherein said mobile handset (100; 100a) comprises a headset interface (140) for connecting a headset (H), and wherein said method further comprises: said mobile handset (100; 100a) controlling the charging current control device (130) to interrupt said flow of said charging current from said at least one input interface (112) to said at least one further component (120) if a headset (H) is connected to said headset interface (140).

12. Method according to one of the claims 9 to 11, wherein said method further comprises: said mobile handset (100; 100a) signalling to a user whether said flow of said charging current from said at least one input interface (112) to said at least one further component (120) is enabled.

13. Method according to claim 12, wherein said method further comprises: said mobile handset (100; 100a) signalling to a user that said flow of said charging current from said at least one input interface (112) to said at least one further component (120) is enabled if at least one of the following conditions is met: an incoming call is detected, an outgoing call is detected, a headset (H) is connected to a headset interface (140).
